Europäisches Patentamt

European Patent Office

Office européen des brevets

(19)

(11) Publication number: **0 150 450 B1**

(12) # EUROPEAN PATENT SPECIFICATION

(45) Date of publication of patent specification: **13.03.91**   (51) Int. Cl.⁵: **C08F 297/08**

(21) Application number: **84115875.1**

(22) Date of filing: **19.12.84**

(54) **Process for preparing an impact-resistant ethylene-propylene block copolymer.**

(30) Priority: **24.12.83 NL 8304440**

(43) Date of publication of application:
**07.08.85 Bulletin 85/32**

(45) Publication of the grant of the patent:
**13.03.91 Bulletin 91/11**

(84) Designated Contracting States:
**AT BE DE FR GB IT NL SE**

(56) References cited:
**FR-A- 2 377 432**
**GB-A- 970 478**
**LU-A- 58 434**

**CHEMICAL ABSTRACTS, vol. 79, 1973, page 55, no. 54505t, Columbus, Ohio, US**

**CHEMICAL ABSTRACTS, vol. 83, no. 16, 16th October 1975, page 28, no. 132315e, Columbus, Ohio, US**

(73) Proprietor: **STAMICARBON B.V.**
**Mijnweg 1**
**NL-6167 AC Geleen(NL)**

(72) Inventor: **Repin, Johannes Fredericus**
**Klingbemden 177**
**NL-6441 KX Brunssum(NL)**
Inventor: **Kisters, Mathijs Joseph M.G.**
**Molenweg 52**
**NL-6133 XN Sittard(NL)**

## Description

The invention relates to a process for preparing an impact-resistant ethylene-propylene block copolymer (C), characterized in that in a first polymerization step a propylene prepolymer (A) is prepared consisting of at least 98 % (wt) of propylene groups and having a melt index measured according to ASTM-D-1238 at 503K and 21.6 N of 0.1-100 dg/min, preferably 0.5-50 dg/min, in that in the presence of the propylene prepolymer (A) produced in the first polymerization step ethylene and propylene are polymerized in a second polymerization step in such a manner that a ethylene-propylene block copolymer (B) is formed comprising a homopolymeric propylene part, consisting for at least 98% (wt) of propylene groups, and a copolymeric ethylene-propylene part, the weight ratio between the homopolymeric propylene part and the copolymeric ethylene-propylene part being from 3 : 2 to 9 : 1, containing a total amount of 10-25 % (wt) ethylene groups and having a melt index measured according to ASTM-D-1238 at 503K and 21.6 N which is 1/100 to 1/2, preferably 1/50 to 1/4 part of the melt index measured according to ASTM-D-1238 at 503K and 21.6N of the propylene prepolymer (A), and in that ethylene-propylene block copolymer (B) is subsequently subjected to a kneading treatment consisting of one or more kneading operations, which kneading takes place in the presence of free radicals as a temperature of at least 450 K, preferably at 470-570 K.
Similar copolymers as obtained by this process are known from EP-A-94818 and EP-A-77532.

These prior art copolymers do not meet the impact properties in combination with the stiffness and good processability of the block copolymers, obtained by the process of the present invention.

A treatment, similar to the kneading treatment mentioned above is known from (CA Vol 79 (1973) p. 55 no. 54505 t).

However, this known treatment results in a deterioration of impact properties whereas in the special combination of polymerisation steps and treatment according to the invention impact and stiffness properties are improved.

The ethylene content is measured by means of IR analysis of the polymer in melted condition. The Izod value is measured on an injection-moulded test sheet and the E-modulus on a compression-moulded test sheet with a thickness of 1.6 mm.

The kneading treatment can be effected in various ways. It implies the exertion of mechanical forces on the starting ethylene-propylene block copolymer e.g. by means of a kneading and/or transport screw of e.g. extruding or injection-moulding equipment or by means of a rolling devide. Preference is given to single-screw or multi-screw kneading, which kneading operation can be repeated more than once, and in which one or more of the kneading operations can be followed by extrusion. The duration of the kneading treatment is at least 1/4 minute, particularly at least 1 minute.

If the kneading treatment consists of more than one kneading operation, there may be a longer period of time between two kneading operations. Thus in a first kneading operation a pre-product (for instance a granulate) can be prepared, subsequently be transported to another place and finally be processed in a second kneading operation according to the invention to form an end product according to the invention.

The presence of free radicals in the process according to the invention can be realized in any suitable manner. A suitable manner consists in the addition, before and/or during the said kneading treatment of a total amount of 10-20000 parts by weight of one or more peroxides per $10^6$ parts by weight starting ethylene-propylene block copolymer to the substance or substances subjected or to be subjected to the kneading treatment. Preference is given to using peroxides having at the average temperature of a kneading operation, a half-time value less than 1/5 of the duration of the relative kneading treatment. Suitable peroxides are di-(t-butylperoxyisopropyl)-benzene, 1,1-di-t-butylperoxy-3,3,5-trimethylcyclohexane, 1,1-di-t-butylperoxycyclohexane, t-butylperoxyisopropylcarbonate, t-butylperoxybenzoate, di-cumylperoxide, di-t-butylperoxide, 2,2-di-t-butylperoxybutane, di-benzoylperoxide, 2,5-di-methylhexane-2,5-di-t-butylperoxide and 2,5-di-methylhexyn-2,5-di-t-butylperoxide.

Another suitable manner for realizing the presence of free radicals is the high-energy irradiation, for instance electron radiation or gamma radiation, of the starting ethylene-propylene block copolymer subjected or to be subjected to the kneading treatment, preferably in the almost complete absence of stabilizers, at a dose of 0.1-4 Mrad.

All kinds of combinations of the use of peroxides and of the said irradiation are suitable as well.

The kneading treatment according to the invention is preferably effected in whole or in part in the presence of at least 50 parts by weight of one or more zinc and/or cadmium compounds, calculated as zinc and/or cadmium atoms, per $10^6$ parts by weight starting ethylene-propylene block copolymer. Other additives, too, may be present or be added during this kneading treatment, for instance heat stabilizers, UV-stabilizers and nucleation agents.

Very suitable fillers for ethylene-propylene block copolymers produced by a process according to the invention are chalk, with by preference an average particle size of below 2 μm, and talcum, with by preference an average particle size of below 5 μm. Suitable are quantities of filler of below 25 % (wt). A higher weight percentage of filler quickly leads to very bad mechanical properties of the copolymer-filler mixture compared with the pure copolymer.

The impact-resistant ethylene-propylene block copolymers produced by a process according to the invention are very suitable for use in car bumpers, front ends, spoilers, liners, motor car underside coats and wheel archlining for motor cars.

## Claims

1. Process for preparing an impact-resistant ethylene-propylene block copolymer (C), characterized in that in a first polymerization step a propylene prepolymer (A) is prepared consisting of at least 98 % (wt) of propylene groups having a melt index measured according to ASTM-D-1238 at 503K and 21.6 N of 0.1-100 dg/min, in that in the presence of the propylene prepolymer (A) produced in the first polymerization step ethylene and propylene are polymerized in a second polymerization step in such a manner that an ethylene-propylene block copolymer (B) is formed comprising a homopolymeric propylene part, consisting of at least 98% (wt) of propylene groups, and a copolymeric ethylene-propylene part, the weight ratio between the homopolymeric propylene part and the copolymeric ethylene-propylene part being from 3 : 2 to 9 : 1, containing a total amount of 10-25 % (wt) ethylene groups and having a melt index measured according to ASTM-D-1238 at 503K and 21.6 N which is 1/100 to 1/2 part of the melt index measured according to ASTM-D-1238 at 503K and 21.6 N of the propylene pre-polymer (A), and in that ethylene-propylene block copolymer (B) is subsequently subjected to a kneading treatment consisting of one or more kneading operations, which kneading treatment takes place in the presence of free radicals at a temperature of at least 450K.

2. Process according to claim 1, characterized in that in the first polymerization step a propylene prepolymer (A) is produced having a melt index measured according to ASTM-D-1238 at 503K and 21.6 N of 0.5-50 dg/min.

3. Process according to claim 1 or 2, characterized in that in the second polymerization step an ethylene-propylene block copolymer (B) is produced having a melt index measured according to ASTM-D-1238 at 503K and 21.6 N which is 1/50 to 1/4 part of the melt index measured according to ASTM-D-1238 at 503K and 21.6N of the propylene prepolymer (A).

4. Process according to any one of claims 1-3, characterized in that the kneading treatment is effected at 470-570K.

5. Process according to any one of claims 1-4, characterized in that the kneading treatment is effected wholly or partly in the presence of at least 50 parts by weight of one or more zinc and/or cadmium compounds, calculated as zinc and/or cadmium atoms, per $10^6$ parts by weight ethylene-propylene block copolymer (B).

6. Process according to any one of claims 1-5, characterized in that before and/or during the said kneading treatment 10-20000 parts by weight of one or more peroxides per $10^6$ parts by weight starting ethylene-propylene block copolymer (B) is added to the substance or substances subjected or to be subjected to the kneading treatment.

7. Process according to any one of claims 1-6, characterized in that the ethylene-propylene block copolymer (B) subjected or to be subjected to the kneading treatment is subjected to high-energy irradiation.

8. Process according to claim 7, characterized in that in the irradiation an irradiation dose of 0.1-4 Mrad is applied.

9. Impact-resistant ethylene-propylene block copolymer (C) obtainable by a process according to any one of claims 1-8.

10. Article wholly or partly made from an impact-resistant ethylene-propylene block copolymer (C) according to claim 9.

## Revendications

1. Procédé de préparation d'un copolymère séquencé (C) éthylène-propylène résistant au choc, caractérisé en ce qu'on prépare, dans un premier stade de polymérisation un prépolymère de propylène (A) comprenant au moins 98% en poids de groupes propylène, ayant un indice de fusion (melt index) mesuré selon ASTM D 1238 à 503 K et 21,6 N de 0,1 à 100 dg/min ;

en ce qu'en présence du prépolymère de propylène (A) obtenu au premier stade de polymérisation, on polymérise de l' éthylène et du propylène dans un second stade de polymérisation de manière à former un copolymère séquencé éthylène/ propylène (B) comprenant une portion propylène homopolymère consistant en au moins 98% en poids de groupes propylène et une portion copolymère éthylène/propylène, le rapport pondéral de la portion propylène homopolymère à la portion copolymère éthylène/propylène valant de 3:2 à 9:1, contenant au total de 10 à 25% en poids de groupes éthylène et ayant un indice de fusion (melt index) selon ASTM D-1238 à 503 K et 21,6 N qui est de 1/100 à ½ partie de 1'indice de fluidité mesuré selon ASTM-D 1238 à 503 K et 21,6 N du prépolymère de propylène (A) et en ce qu'on soumet ensuite le copolymère séquencé éthylène/propylène (B) à un traitement de malaxage consistant en une ou plusieurs opérations de malaxage, ce traitement de malaxage ayant lieu en présence de radicaux libres à une température d'au moins 450 K.

2. Procédé selon la revendication 1, caractérisé en ce qu'au premier stade de polymérisation, on obtient un prépolymère de propylène (A) ayant un indice de fusion (melt index) mesuré selon ASTM D 1238 à 503 K et 21,6 N de 0,5 à 50 dg/min.

3. Procédé selon la revendication 1 ou 2, caractérisé en ce qu'au second stade de polymérisation, on prépare un copolymère séquencé éthylène/propylène (B) ayant un indice de fusion (melt index) mesuré selon ASTM D 1238 à 503 K et 21,6 N qui est de 1/50 à 1/4 partie de l' indice de fluidité à l'état fondu du prépolymère de propylène (A) mesuré selon ASTM D 1238 à 503 K et 21,6 N.

4. Procédé selon l'une quelconque des revendications 1 à 3, caractérisé en ce qu'on effectue le traitement de malaxage à 470-570 K.

5. Procédé selon l'une quelconque des revendications 1 à 4, caractérisé en ce qu'on effectue le traitement de pétrissage en totalité ou en partie, en présence d'au moins 50 parties en poids d'un (ou plusieurs) composé de zinc et/ou de cadmium, qu'on calcule en atomes de zinc et/ ou de cadmium par $10^6$ parties en poids de copolymère séquencé éthylène/propylène (B).

6. Procédé selon l'une quelconque des revendications 1 à 5, caractérisé en ce qu'avant et/ou pendant ledit traitement de malaxage, on ajoute de 10 à 20000 parties en poids d'un (ou plusieurs) peroxyde par $10^6$ parties en poids du copolymère séquencé de départ éthylène/propylène (B) à la substance ou aux substances soumise ou devant être soumise au traitement de malaxage.

7. Procédé selon l'une quelconque des revendications 1 à 6, caractérisé en ce qu'on soumet à une irradiation haute énergie le copolymère séquencé éthylène/propylène (B) ayant subi ou devant subir le traitement de malaxage.

8. Procédé selon la revendication 7, caractérisé en ce qu'on applique une dose d' irradiation de 0,1 à 4 Mrad.

9. Copolymère séquencé éthylène/propylène (C) résistant au choc formé par un procédé selon l'une quelconque des revendications 1 à 8.

10. Article fabriqué tout ou partie en un copolymère séquencé (C) éthylène/propylène selon la revendication 9.

## Ansprüche

1. Verfahren zum Herstellen eines schlagfesten Äthylen-Propylenblockcopolymers (C), dadurch gekennzeichnet, daß in einem ersten Polymerisationsschritt ein Propylenpräpolymer (A) hergestellt wird, das aus mindestens 98 % (Gew.) Propylengruppen besteht und einen Schmelzindex, gemessen gemäß ASTM-D-1238 bei 503 K und 21,6 N, von 0,1 bis 100 dag/min aufweist, daß in Anwesenheit des im ersten Polymerisationsschritt hergestellten Propylenpräpolymers (A) Äthylen und Propylen in einem zweiten Polymerisationsschritt auf solche Weise polymerisiert werden, daß ein Äthylen-Propylenblockcopolymer (B) gebildet wird, das einen homopolymeren Propylenteil bestehend aus mindestens 98 % (Gew.) Propylengruppen und einen copolymeren Äthylen-Propylenteil umfaßt, wobei das Gewichtsverhältnis zwischen dem homopolymeren Propylenteil und dem copolymeren Äthylen-Propylenteil 3 : 2 bis 9 : 1 beträgt, das eine Gesamtmenge von 10 bis 25 % (Gew.) Äthylengruppen enthält und einen Schmelzindex, gemessen gemäß ASTM-D-1238 bei 503 K und 21,6 N, aufweist, der 1/100 bis 1/2 des Schmelzindex, gemessen gemäß ASTM-D-1238 bei 503 K und 21,6 N, des Propylenpräpolymers (A) beträgt, und daß das Äthylen-Propylenblockcopolymer (B) anschließend einer Knetbehandlung bestehend aus einem oder mehreren Knetvorgängen unterworfen wird, welche Knetbehandlung in Anwesenheit von freien Radikalen bei einer Temperatur von mindestens 450 K erfolgt.

2. Verfahren nach Anspruch 1, dadurch gekennzeichnet, daß im ersten Polymerisationsschritt ein Propylenpräpolymer (A) mit einem Schmelzindex, gemessen gemäß ASTM-D-1238 bei 503 K und 21,6 H, von 0,5 bis 50 dag/min hergestellt wird.

3. Verfahren nach Anspruch 1 oder 2, dadurch gekennzeichnet, daß im zweiten Polymerisationsschritt ein Äthylen-Propylenblockcopolymer (B) mit einem Schmelzindex, gemessen gemäß ASTM-D-1238 bei 503 K und 21,6 N, der 1/50 bis 1/4 des Schmelzindex, gemessen gemäß ASTM-D-1238 bei 503 K und 21,6 N, des Propylenpräpolymers (A) beträgt, hergestellt wird.

4. Verfahren nach einem der Ansprüche 1 bis 3, dadurch gekennzeichnet, daß die Knetbehandlung bei 470 bis 570 K bewirkt wird.

5. Verfahren nach einem der Ansprüche 1 bis 4, dadurch gekennzeichnet, daß die Knetbehandlung zur Gänze oder zum Teil in Anwesenheit von mindestens 50 Gew.Teilen einer oder mehrerer Zink- und/oder Cadmiumverbindungen, berechnet als Zink- und/oder Cadmiumatome, pro $10^6$ Gew.Teile Äthylen-Propylen-Blockcopolymer (B) bewirkt wird.

6. Verfahren nach einem der Ansprüche 1 bis 5, dadurch gekennzeichnet, daß vor und/oder während der Knetbehandlung 10 bis 20 000 Gew.Teile eines oder mehrerer Peroxide pro $10^6$ Gew.Teile Äthylen-Propylenblockcopolymer (B) der Substanz oder den Substanzen, die der Knetbehandlung unterworfen werden oder unterworfen werden sollen, zugesetzt werden.

7. Verfahren nach einem der Ansprüche 1 bis 6, dadurch gekennzeichnet, daß das Äthylen-Propylenblockcopolymer (B), das der Knetbehandlung unterworfen wird oder unterworfen werden soll, Hochenergiebestrahlung ausgesetzt wird.

8. Verfahren nach Anspruch 7, dadurch gekennzeichnet, daß bei der Bestrahlung eine Bestrahlungsdosis von 0,1 bis 4 Mrad angewandt wird.

9. Schlagfestes Äthylen-Propylenblockcopolymer (C), erhältlich nach einem Verfahren nach einem der Ansprüche 1 bis 8.

10. Gegenstand, der zur Gänze oder zum Teil aus einem Schlagfesten Äthylen-Propylenblockcopolymer (C) nach Anspruch 9 hergestellt ist.